# EUROPÄISCHE PATENTSCHRIFT

(11) **EP 0 689 212 B1**
(45) Veröffentlichungstag und Bekanntmachung des Hinweises auf die Patenterteilung: **18.03.1998**
(21) Anmeldenummer: 95109568.6
(22) Anmeldetag: 20.06.1995
(51) Int. Cl.: G21C 9/06

(54) **Vorrichtung zur Inertisierung der Atmosphäre in einem Kernkraftwerks-Containment**
Arrangement for rendering inert the atmosphere in a nuclear reactor containment
Installation permettant de rendre inerte l'atmosphère intérieure d'une enceinte de confinement de réacteur nucléaire

(30) Priorität: 21.06.1994 DE 4421601
(43) Veröffentlichungstag der Anmeldung: 27.12.1995
(73) Patentinhaber: SIEMENS AKTIENGESELLSCHAFT, 80333 München (DE)
(72) Erfinder: Eckhardt, Bernd, Dipl.-Ing., D-63486 Bruchköbel (DE)

(56) Entgegenhaltungen:
- EP-A- 0 019 907
- DE-A- 3 927 958
- DE-A- 3 927 959
- DE-B- 1 063 291
- PATENT ABSTRACTS OF JAPAN vol. 17, no. 207 (P-1525) 22. April 1993 & JP-A-04 348 299 (HITACHI LTD) 3. Dezember 1992

## Beschreibung

Die Erfindung betrifft eine Vorrichtung zur Inertisierung der Atmosphäre in einem Kernkraftwerks-Containment, zum Beispiel in einem Kernkraftwerk mit einem Druckwasserreaktor, in dem sich nach einem Störfall die Bildung eines explosiven Gasgemisches anbahnt, wobei beispielsweise Wasserstoff als einer der reaktiven Bestandteile vorhanden ist.

In Kernkraftwerken können bei bestimmten Störfällen, bei denen aufgrund von Kernaufheizung und Zirkoniumoxydation größere Mengen von Wasserstoffgas freigesetzt werden, explosive Gasgemische entstehen.

Zur Verhinderung der Bildung derartiger explosiver Gasgemische im Containment von Kernkraftwerken werden die verschiedensten Einrichtungen diskutiert. Hierzu gehören beispielsweise Einrichtungen wie katalytische Rekombinatoren, katalytisch und elektrisch betriebene Zündeinrichtungen, die Kombination der beiden vorgenannten Einrichtungen, permanente oder nachträgliche Inertisation und auch eine nachträgliche Inertisation mit gleichzeitiger Druckentlastung des Containments.

Zur Inertisation sind auch Verfahren bekannt, bei denen eine Flüssiggaseinspeisung über verzweigte Düsensysteme oder konventionelle Gaseinspeisesysteme mit integrierter Ölbrenner- oder Gasbrenner-Verdampferanlage vorgeschlagen sind. Andere Varianten basieren wiederum auf der Flüssigeinspeisung, wobei wegen der fehlenden Verdampfungsenergien in der Atmosphäre der Kernkraftwerke auch eine Einspeisung in einen Wassersumpf innerhalb des Reaktorsicherheitsbehälters vorgesehen ist. Nachteilig ist bei dieser Variante jedoch, daß je nach Störfallverlauf möglicherweise überhaupt kein Sumpf vorhanden ist und daß durch die Inertgasfreisetzung im tiefgelegenen Bereich des Reaktorsicherheitsbehälters eine starke Temperaturschichtung und eine sich daraus ergebende schichtweise und dadurch ungünstige Verteilung der Inertgase auftritt.

Diese bekannten Verfahren werden bislang wegen der ungünstigen Eigenschaften der Einspeisesysteme so negativ bewertet, daß bisher eine Anwendung nicht in Betracht gezogen worden ist. Dies zeigt auch sehr deutlich die Beschreibungseinleitung der Deutschen Offenlegungsschrift DE 39 27 958 A1.

Der Erfindung liegt daher die Aufgabe zugrunde, eine Vorrichtung zu schaffen, mit der beim Auftreten eines Störfalls eine schnelle nachträgliche Inertisierung der Atmosphäre im Containment eines Kernkraftwerks sicher durchführbar ist.

Diese Aufgabe wird erfindungsgemäß mit einer Vorrichtung der eingangs genannten Art dadurch gelöst, daß eine Vielzahl von strömungstechnisch parallel geschalteten Austrittsöffnungen für ein Inertgas vorgesehen ist, daß die Strömungsgeschwindigkeit des Inertgases in den Austrittsöffnungen größer als das 0,3-fache der Schallgeschwindigkeit dieses Gases ist und daß bei Nutzung aller Austrittsöffnungen für eine Einspeisung des Inertgases der O₂-Gehalt in der Atmosphäre des Kernkraftwerk-Containments frühestens nach ca. 2 Stunden kleiner als 17 Vol.% ist.

Nach vorteilhaften Weiterbildungen der Erfindung ist vorgesehen, daß mindestens einige der Austrittsöffnungen als Düsen mit kegeligem Längsschnitt ausgestaltet sind oder daß mindestens einige Düsen trichterförmig aus annähernd ebenen Begrenzungsflächen geformt sind und einen rechteckigen Querschnitt mit einem Seitenverhältnis von 1 : 10 bis 1 : 40 aufweisen. Unabhängig von der speziellen Gestaltungsform der Düsen weisen diese erfindungsgemäß für einen aus ihnen austretenden Strahl des Inertgases eine Wurfweite auf, die größer ist als 50 % der größten Abmessung des Containments (von z.B. 50 m Durchmesser).

Gemäß einer weiteren Ausgestaltung der Erfindung erzwingen einige der Düsen eine Beschleunigung des Inertgases auf mehr als dessen Schallgeschwindigkeit oder sie sind als Venturidüsen ausgebildet. Zweckmäßigerweise ist der aus den Düsen austretende Strahl des Inertgases durch eine weitere Düse geführt und saugt am Eintritt in diese mindestens das 5-fache seines eigenen Volumens aus der Atmosphäre des Containments an. Dabei ist es zweckmäßig, wenn der Strahl des Inertgases beim Eintritt in die weitere Düse noch Überschallgeschwindigkeit hat.

Nach weiteren Ausgestaltungsmerkmalen der erfindungsgemäßen Vorrichtung gewährleistet die Länge der weiteren Düse ein annähernd homogenes Gemisch aus Inertgas und angesogener Atmosphäre an ihrem Austrittsende. Die weitere Düse kann auf eine den sie umgebenden Raum abschließende Berstfolie gerichtet sein, die durch einen austretenden Gasgemischstrahl zerstörbar ist, wobei das Innere des Containments in eine Vielzahl von Kammern (Zellen) unterteilt ist, die durch die Berstfolien mindestens zwei Gruppen bilden, von denen die eine Gruppe weitere Düsen aufweist und deren zweite Gruppe im Normalbetrieb ohne besondere Maßnahme durch Servicepersonal begehbar ist.

Eine sehr vorteilhafte Weiterbildung der erfindungsgemäßen Vorrichtung besteht darin, dem Strahl aus Inert- und Atmosphärengas im Bereich der weiteren Düse fein zerstäubtes, noch unverdampftes Inertgas zuzuführen, dem ein Aerosol zugemischt ist, das einen Katalysator zur Oxydation von Wasserstoff enthält.

Es ist vorteilhaft, wenn das Inertgas in den zu den Düsen führenden Rohren einen Druck von mehr als 500 KPa aufweist oder in den Rohren Begrenzer zur Einstellung der Stärke des Inertgasstromes vorgesehen sind.

Zweckmäßig sind während der Einspeisung des Inertgases in das Containment lediglich diese Einspeisung ermöglichende Öffnungen in der Wandung des Containments geöffnet und ist dieses im übrigen hermetisch nach außen abgeschlossen.

Die erfindungsgemäße Vorrichtung ist sehr vorteilhaft, weil sie eine schnelle, erst beim Auftreten eines entsprechenden Störfalls aktivierbare Nachinertisierung des Containments eines Kernkraftwerkes ermöglicht, ohne dabei in diesem tätiges Servicepersonal zu gefährden.

Ein Ausführungsbeispiel der Erfindung wird anhand einer Zeichnung näher erläutert. Im einzelnen zeigen:
Fig. 1 ein Ausführungsprinzip einer erfindungsgemäßen Vorrichtung, und
Fig. 2 und 3 spezielle Düsenausführungen in größerem Maßstab.

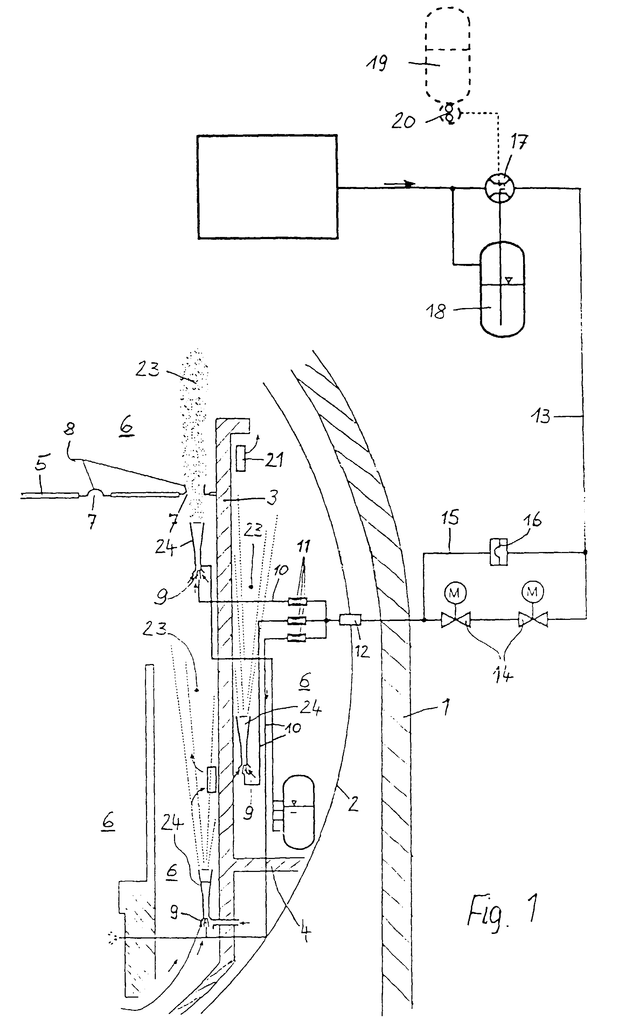

Ein Containment 1 (siehe Figur 1) eines Kernkraftwerkes, insbesondere eines mit einem Druckwasserreaktor ausgerüsteten Kernkraftwerkes umfaßt eine Sicherheitshülle 2, die durch Zwischenwände 3 und Böden 4 sowie Decken 5 in Kammern 6 unterteilt ist. In den Decken 5 und den Zwischenwänden 3 einiger Kammern sind Öffnungen 7 vorgesehen, die im Normalbetrieb des Kernkraftwerks durch je eine Berstfolie 8 verschlossen sind.

In den Kammern 6 sind nichtdargestellte Anlagenteile des Kernkraftwerks untergebracht. Die Kammern 6 sind außerdem in zwei Gruppen unterteilt, von denen die einer ersten Gruppe zugeordneten Kammern 6 während des Normalbetriebs mehr oder weniger regelmäßig von Servicepersonal begangen werden und deren der zweiten Gruppe zugeordnete Kammern im Normalbetrieb nicht betreten werden müssen. Zwischen den Kammern 6 der ersten und der zweiten Gruppe liegen die Öffnungen 7, die durch Berstfolien verschlossen sind.

In den Kammern der zweiten Gruppe vorgesehene Austrittsöffnungen 9 für ein Inertgas bilden die Enden von Inertgaszuführungsleitungen 10, die über Durchflußmengenbegrenzer 11 und eine Durchführung 12 in eine Inertgasleitung 13 angeschlossen sind. Die Inertgasleitung 13 ist durch zwei in Reihe geschaltete Motorventile 14 versperrbar. In einer Bypassleitung 15 zu den Motorventilen 14 liegt eine Berstscheibe 16.

In den Kammern 6 beider Gruppen sind katalytisch wirkende Rekombinatoren 21 angebracht, durch die unabhängig von äußeren Einflüssen freier Wasserstoff mit dem Sauerstoff der Containmentatmosphäre oxydiert wird.

Die Inertgasleitung 13 wird über ein Drosselventil oder eine Strahlpumpe 17 aus einer Verdampferanlage mit Inertgas gespeist. Als Inertgas dient vorzugsweise Kohlendioxyd oder Stickstoff. Beispielsweise zur Steuerung von Temperatur und/oder Druck des Inertgases in der Inertgasleitung 13 wird das Inertgas im Bereich der Strahlpumpe 17 mit noch flüssigem Inertgas aus einem Zuspeisebehälter 18 gemischt.

Dem Inertgas wird außerdem ein katalytisches Aerosol beigemischt, durch das die Oxydation von möglicherweise in der Atmosphäre des Containments 1 vorhandenem Wasserstoff eingeleitet wird. Diese Katalytflüssigkeit kommt aus einem Speicher 19 und wird in einem Dispergierer 20 zu einem Aerosol aufbereitet, das dem Inertgas im Bereich cer Strahlpumpe 17 beigemischt wird.

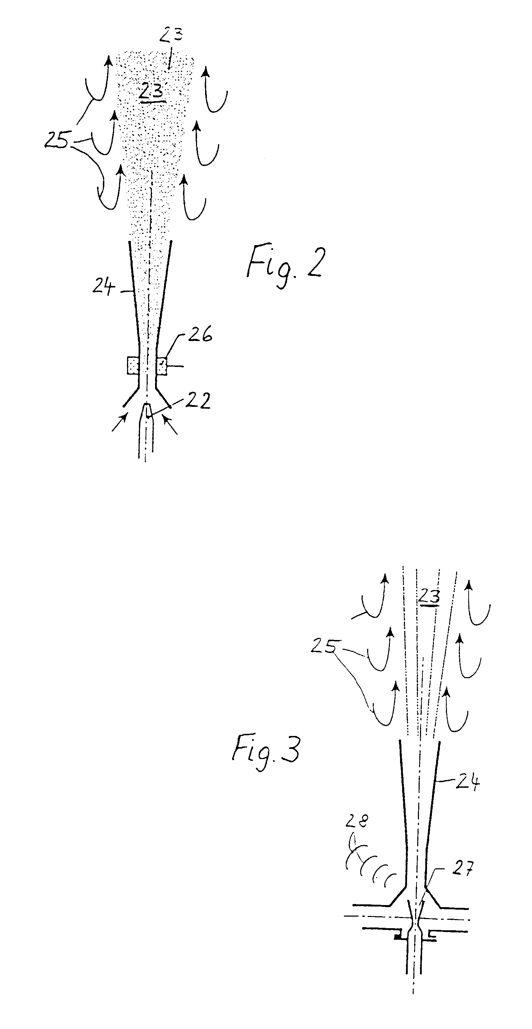

Fig. 2 zeigt eine als Düse 22 mit kegeligem Querschnitt ausgebildete Austrittsöffnung 9. Der Querschnitt der Düse 22 kann jedoch auch rechteckig sein mit einem Seitenverhältnis von 1 : 10 bis 1 : 40. Ein aus der Düse 22 abströmender Inertgasstrahl 23 trifft auf eine weitere Düse 24 und bildet zusammen mit dieser eine Strahlpumpe, die aus ihrer Umgebung Luft ansaugt und mit dem Inertgas mischt. Durch entsprechende Dimensionierung der Düsen 22 und 24 saugt der Inertgasstrahl 23 mindestens das 5-fache seinen eigenen Volumens an.

Die Mantelfläche der weiteren Düse 24 ist von einer Einspeisekammer 26 umfaßt, durch die, wie auch schon in der Strahlpumpe 17, nochmals noch flüssiges Inertgas in den Inertgasstrahl 23 einspeisbar ist.

Das noch flüssige Inertgas weist dabei eine im Vergleich zum Inertgasstrahl 23 wesentlich geringere Geschwindigkeit auf. Durch die hohe Relativgeschwindigkeitsdifferenz zwischen dem noch flüssigen Inertgas und dem Inertgasstrahl 23 wird dabei zusätzlich eine Feinsttropfendispergierung oder Kristallbildung begünstigt, wobei eine Verdampfung durch die Enthalpie aus der angesaugten Umgebungsatmosphäre erreicht wird. Somit ist die für eine Schnellinertisierung notwendige hohe Verdampfungsrate besonders effektiv erreichbar.

Der mit Luft vermischte Inertgasstrahl 23 verläßt die weitere Düse 24 immer noch mit hoher Geschwindigkeit, so daß er sich durch Turbulenzen 25 an seinem Außenbereich mit Umgebungsluft vermischt und in der Lage ist, eine Berstfolie 8 zu zerreißen. Insgesamt wird dadurch eine ebenso schnelle wie gründliche Vermischung des Inertgases mit der Umgebungsluft, also der Containmentatmosphäre, erzwungen.

Fig. 3 zeigt eine Austrittsöffnung 9, die nach Art einer Venturidüse 27 gestaltet ist und den Inertgasstrahl 23 zumindest über eine kurze Wegstrecke auf beispielsweise mehr als Schallgeschwindigkeit beschleunigt. Der aus der Venturidüse 27 austretende Strahl trifft wieder auf eine weitere Düse 24 und vermischt sich nach deren Verlassen in Turbulenzen 25 mit Umgebungsluft.

Sowohl bei der Anordnung nach Fig. 2 als auch nach der gemäß Fig. 3 erzeugt der aus der Düse 22 bzw. 27 austretende Inertgasstrahl ein durch Schallwellen 28 angedeutetes lautes Geräusch, durch das das anwesende Servicepersonal gewarnt und zum Verlassen des Containments veranlaßt wird.

## Patentansprüche

1. Vorrichtung zur Inertisierung der Atmosphäre in einem Kernkraftwerks-Containment (1), in dem sich nach einem Störfall die Bildung eines explosiven Gasgemisches anbahnt, beispielsweise mit Wasserstoff als einem der reaktiven Bestandteile,
**dadurch gekennzeichnet,**
- daß eine Vielzahl von strömungstechnisch parallel geschalteten Austrittsöffnungen (9) für ein Inertgas vorgesehen ist,
- daß die Strömungsgeschwindigkeit des Inertgases in den Austrittsöffnungen (9) größer als das 0,3-fache der Schallgeschwindigkeit dieses Gases ist, und
- daß bei Nutzung aller Austrittsöffnungen (9) für eine Einspeisung des Inertgases der O₂-Gehalt in der Atmosphäre des Containments frühestens nach ca. 2 Stunden kleiner als 17 Vol.% ist.

2. Vorrichtung nach Anspruch 1,
**dadurch gekennzeichnet,**
daß mindestens einige der Austrittsöffnungen (9) als Düsen (22) mit kegeligem Längsschnitt ausgestaltet sind.

3. Vorrichtung nach Anspruch 2,
**dadurch gekennzeichnet,**
daß mindestens einige Düsen (22) trichterförmig aus annähernd ebenen Begrenzungsflächen geformt sind und einen rechteckigen Querschnitt mit einem Seitenverhältnis von 1:10 bis 1:40 haben.

4. Vorrichtung nach einem der Ansprüche 2 oder 3,
**dadurch gekennzeichnet,**
daß die Düsen (22) eine Wurfweite für einen aus ihnen austretenden Strahl (23) des Inertgases von 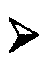 50 % der größten Abmessung des Containments (1) aufweisen.

5. Vorrichtung nach einen der Ansprüche 2 bis 4,
**dadurch gekennzeichnet,**
daß einige Düsen (27) eine Beschleunigung des Inertgases auf mehr als dessen Schallgeschwindigkeit erzwingen oder als Venturidüsen ausgebildet sind.

6. Vorrichtung nach einem der Ansprüche 2 bis 5,
**dadurch gekennzeichnet,**
daß das aus einer Düse (22,27) als Strahl (23) austretende Inertgas durch eine weitere Düse (24) geführt ist und am Eintritt in diese mindestens das 5-fache seines eigenen Volumens aus der Atmosphäre des Containments (1) ansaugt.

7. Vorrichtung nach Anspruch 6,
**dadurch gekennzeichnet,**
daß der Strahl (23) des Inertgases beim Eintritt in die weitere Düse (24) Überschallgeschwindigkeit hat.

8. Vorrichtung nach Anspruch 6 oder 7,
**dadurch gekennzeichnet,**
daß die Länge der weiteren Düse (24) ein annähernd homogenes Gemisch aus Inertgas und angesogener Atmosphäre an ihrem Austritt gewährleistet.

9. Vorrichtung nach einem der Ansprüche 6 bis 8,
**dadurch gekennzeichnet,**
daß die weitere Düse (24) auf eine den sie umgebenden Raum abschließende Berstfolie (8) gerichtet ist, die durch einen austretenden Gasgemischstrahl (23) zerstörbar ist.

10. Vorrichtung nach einem der Ansprüche 6 bis 9,
**dadurch gekennzeichnet,**
daß das Innere des Containments (1) in eine Vielzahl von Kammern (6) unterteilt ist, die durch die Berstfolien (8) mindestens zwei Gruppen bilden, von denen die eine Gruppe weitere Düsen (24) aufweist und deren zweite Gruppe im Normalbetrieb ohne besondere Maßnahme begehbar ist.

11. Vorrichtung nach einem der Ansprüche 6 bis 10,
**dadurch gekennzeichnet,**
daß dem Strahl (23) aus Inert- und Atmosphärengas im Bereich (26) der weiteren Düse (24) fein zersteubtes noch unverdampftes Inertgas zugeführt ist.

12. Vorrichtung nach einem der Ansprüche 2 bis 11,
**dadurch gekennzeichnet,**
daß das Inertgas in zu den Düsen (22, 27) führenden Rohren (10) einen Druck von mehr als 500 kPa (5 bar) aufweist.

13. Vorrichtung nach einem der Ansprüche 2 bis 12,
**dadurch gekennzeichnet,**
daß in den zu den Düsen (22, 27) führenden Rohren (10) Begrenzer (11) zur Einstellung der Stärke des Inertgasstromes vorgesehen sind.

14. Vorrichtung nach einem der Ansprüche 1 bis 13,
**dadurch gekennzeichnet,**
daß dem Inertgas ein Aerosol zugemischt ist, das einen Katalysator zur Oxydation von Wasserstoff enthält.

15. Vorrichtung nach einem der Ansprüche 1 bis 14,
**dadurch gekennzeichnet,**
daß während der Einspeisung des Inertgases lediglich hierzu dienende Öffnungen (12) in dem Containment (1) geöffnet sind und daß das Containment im übrigen hermetisch nach außen abgeschlossen ist.

## Claims

1. Device for rendering inert the atmosphere in a nuclear power station containment (1), in which, after an incident, the formation of an explosive gas mixture starts to develop, for example with hydrogen as one of the reactive components, characterised
- in that there is provided a plurality of outlet openings (9) for an inert gas, which outlet openings are fluidically connected in parallel,
- in that the flow velocity of the inert gas into the outlet openings (9) is greater than the 0.3-fold of the sound velocity of this gas, and
- in that when all outlet openings (9) are used for feeding in the inert gas, the O₂ content in the atmosphere of the containment is less than 17% by volume at the earliest after approximately 2 hours.

2. Device according to claim 1, characterised in that at least some of the outlet openings (9) are constructed as nozzles (22) having a conical longitudinal section.

3. Device according to claim 2, characterised in that at least some of the nozzles (22) are shaped in a funnel-like manner from approximately planar delimiting surfaces and have a rectangular cross-section with a height-width ratio of 1:10 to 1:40.

4. Device according to one of the claims 2 or 3, characterised in that the nozzles (22) have a throwing range for a jet (23) of inert gas that exits from them of >50% of the largest dimension of the containment (1).

5. Device according to one of the claims 2 to 4, characterised in that some of the nozzles (27) force an acceleration of the inert gas to more than its sound velocity or are constructed as venturi nozzles.

6. Device according to one of the claims 2 to 5, characterised in that the inert gas exiting from a nozzle (22, 27) as a jet (23) is led through a further nozzle (24) and at the entry into the latter draws in at least the 5-fold of its own volume from the atmosphere of the containment (1).

7. Device according to claim 6, characterised in that upon entry into the further nozzle (24), the jet (23) of the inert gas has supersonic velocity.

8. Device according to claim 6 or 7, characterised in that the length of the further nozzle (24) ensures a substantially homogenous mixture of inert gas and drawn-in atmosphere at the outlet of said nozzle.

9. Device according to one of the claims 6 to 8, characterised in that the further nozzle (24) is directed towards a bursting foil (8), which closes off the space surrounding said nozzle and can be destroyed by an exiting gas-mixture jet (23).

10. Device according to one of the claims 6 to 9, characterised in that the interior of the containment (1) is subdivided into a plurality of chambers (6) which, by means of the bursting foils (8), form at least two groups, of which the one group has further nozzles (24) and the second group is safe to use in normal operation without special measures.

11. Device according to one of the claims 6 to 10, characterised in that inert gas which is finely atomised and still unvaporised is supplied to the jet (23) consisting of inert gas and atmospheric gas in the region (26) of the further nozzle (24).

12. Device according to one of the claims 2 to 11, characterised in that the inert gas in pipes (10) leading to the nozzles (22, 27) has a pressure of more than 500 kPa (5 bar).

13. Device according to one of the claims 2 to 12, characterised in that provided in the pipes (10) leading to the nozzles (22, 27) are limiters (11) for adjusting the force of the inert gas current.

14. Device according to one of the claims 1 to 13, characterised in that an aerosol containing a catalyst for the oxidation of hydrogen is added to the inert gas.

15. Device according to one of the claims 1 to 14, characterised in that during the feeding in of the inert gas, openings (12) in the containment (1) that are used for this purpose alone are opened, and in that the containment is furthermore hermetically sealed with respect to the outside.

## Revendications

1. Installation permettant de rendre inerte l'atmosphère d'une enceinte (1) de confinement d'une centrale nucléaire dans laquelle il s'amorce après un incident la formation d'un mélange gazeux explosif, par exemple avec de l'hydrogène comme l'un des constituants réactifs,
caractérisé
- en ce qu'il est prévu une pluralité d'orifices (9) de sortie d'un gaz inerte montés en parallèle du point de vue de la technique d'écoulement des fluides,
- en ce que la vitesse d'écoulement du gaz inerte dans les orifices (9) de sortie est supérieure à 0,3 fois la vitesse du son dans ce gaz, et
- en ce que lorsque l'on utilise tous les orifices (9) de sortie pour une alimentation en gaz inerte, la teneur en O₂ de l'atmosphère de l'enceinte de confinement est, au plus tôt deux heures après environ, inférieure à 17% en volume.

2. Installation suivant la revendication 1,
caractérisé
en ce qu'au moins certains des orifices (9) de sortie sont conformés en buses (22) de section longitudinale conique.

3. Installation suivant la revendication 2,
caractérisé
en ce qu'au moins certaines buses (22) sont conformées en entonnoir à partir de surfaces de délimitation planes et en une section transversale rectangulaire ayant un rapport des cotés de 1:10 à 1:40.

4. Installation suivant l'une des revendications 2 ou 3,
caractérisé
en ce que les buses (22) ont une portée de jet pour un jet (23) du gaz inerte qui en sort supérieure à 50% de la plus grande dimension de l'enceinte (1) de confinement.

5. Installation suivant l'une des revendications 2 à 4,
caractérisé
en ce que quelques buses (27) donnent une accélération du gaz inerte supérieure à la vitesse du son dans celui-ci ou sont constituées en buses à venturi.

6. Installation suivant l'une des revendications 2 à 5,
caractérisé
en ce que le gaz inerte sortant sous forme de jet (23) d'une buse (22,27) passe dans une autre buse (24) et à l'entrée dans celle-ci aspire au moins 5 fois son propre volume de l'atmosphère de l'enceinte (1) de confinement.

7. Dispositif suivant la revendication 6,
caractérisé
en ce que le jet (23) du gaz inerte a à l'entrée dans l'autre buse (24) une vitesse supérieure à la vitesse du son.

8. Dispositif suivant la revendication 6 ou 7,
caractérisé
en ce que la longueur de l'autre buse (24) assure un mélange sensiblement homogène du gaz inerte et de l'atmosphère aspirée à sa sortie.

9. Dispositif suivant l'une des revendications 6 à 8,
caractérisé
en ce que l'autre buse (24) est dirigée sur une feuille (28) destinée à éclater fermant l'espace entourant l'autre buse (24) et pouvant être détruite par un jet (23) de mélange gazeux sortant.

10. Dispositif suivant l'une des revendications 6 à 9,
caractérisé en ce que l'intérieur de l'enceinte (1) de confinement est subdivisé en une pluralité de chambres (6) qui forment par les feuilles (8) destinées à éclater au moins deux groupes dont l'un comporte d'autres buses (24) et dont le second peut se prêter à la circulation en fonction normale sans mesure particulière.

11. Dispositif suivant l'une des revendications 6 à 10,
caractérisé en ce qu'il est envoyé au jet (23) de gaz inerte et de gaz de l'atmosphère dans la zone (26) de l'autre buse (24) du gaz inerte finement atomisé et non encore évaporé.

12. Dispositif suivant l'une des revendications 2 à 11,
caractérisé en ce que le gaz inerte a dans les conduits (10) menant aux buses (22,27) une pression supérieure à 500 kPa (5bar).

13. Dispositif suivant l'une des revendications 2 à 12,
caractérisé en ce qu'il est prévu dans les conduits (10) menant aux buses (22,27) des limiteurs (11) de limitation de la force du courant de gaz inerte.

14. Dispositif suivant l'une des revendications 1 à 13,
caractérisé en ce qu'il est ajouté au gaz inerte un aérosol qui renferme un catalyseur d'oxydation de l'hydrogène.

15. Dispositif suivant l'une des revendications 1 à 14,
caractérisé en ce que pendant l'alimentation du gaz inerte seul sont ouverts dans l'enceinte (1) de confinement des orifices (12) servant à cet effet et en ce que l'enceinte de confinement est pour le reste fermée hermétiquement vers l'extérieur.
